# EUROPEAN PATENT APPLICATION

(11) **EP 3 138 821 A1**
(43) Date of publication of application: **08.03.2017**
(21) Application number: 15786130.3
(22) Date of filing: 17.04.2015
(51) Int. Cl.: C03B 23/203, B23K 26/00, B23K 26/082, B23K 26/21

(54) **METHOD OF GLASS PLATE FUSION MEDIATED BY LASER BEAM AND LASER PROCESSING DEVICE**

(30) Priority: 02.05.2014 JP 2014094982
(71) Applicant: Mitsuboshi Diamond Industrial Co., Ltd., Settsu Osaka 566-0034 (JP)
(72) Inventor: MIYAZAKI, Yuhan, Settsu city Osaka 566-0034 (JP); SASHIMA, Tokutake, Settsu city Osaka 566-0034 (JP); YAMAMOTO, Koji, Settsu city Osaka 566-0034 (JP); SHIMIZU, Seiji, Settsu city Osaka 566-0034 (JP)
(74) Representative: TBK
(86) International application number: PCT/JP2015/061856
(87) International publication number: WO 2015/166823

(57) **Abstract**

Two glass substrates are fused using a simple method and a simple apparatus configuration without deformation of processed end surfaces. This method for fusing glass substrates is a method in which two glass substrates in close contact are irradiated with a laser beam and fused together, and includes a first step and a second step. In the first step, a first glass substrate and a second glass substrate are brought into close contact. In the second step, the first glass substrate and the second glass substrate are melted and fused together by scanning a laser beam having a wavelength of 2.7 µm or more and 6.0 µm or less along a portion where the first and second glass substrates are in close contact.

## Description

### Technical Field

The present invention relates to a method for fusing glass substrates, and particularly relates to a method for fusing glass substrates in which two glass substrates in close contact are irradiated with a laser beam and fused together, and a laser processing apparatus for achieving this method.

### Background Art

Patent Document 1 discloses a method for manufacturing a laminated glass substrate constituted by two stacked glass substrates.

In a method for joining glass substrates shown in FIG. 2 in Patent Document 1, first, two glass substrates are stacked, and then the two stacked glass substrates are held between a pair of holding members. At this time, the edge portions of the two holding members project from the end surfaces of the two glass substrates. Then, the end surfaces of the two glass substrates are irradiated with a laser beam, and thus the edge portions of the two glass substrates are fused together.

### Citation List

### Patent Document

Patent Document 1: JP 2000-281368A

### Summary of Invention

### Technical Problem

In the method disclosed in Patent Document 1, two glass substrates are held between a pair of holding members, thus making it possible to prevent portions of the two glass substrates irradiated with a laser beam from melting and flowing down.

However, the method disclosed in Patent Document 1 requires a pair of holding members between which the glass substrates to be brought into close contact are held.

The present invention was achieved in order to suppress deformation of processed end surfaces due to melting using a simple method and a simple apparatus configuration while fusing two glass substrates.

### Solution to Problem

A method for fusing glass substrates according to an aspect of the present invention is a method in which two glass substrates in close contact are irradiated with a laser beam and fused together, and includes a first step and a second step. In the first step, a first glass substrate and a second glass substrate are brought into close contact. In the second step, the first glass substrate and second glass substrate are melted and fused together by irradiating a portion where the first and second glass substrates are to be joined with a laser beam having a wavelength of 2.7 µm or more and 6.0 µm or less.

In this method, the portion where the two glass substrates are to be joined are irradiated with a mid-infrared laser beam having a wavelength of 2.7 µm or more and 6.0 µm or less. Mid-infrared light is absorbed while penetrating to the inside of a glass substrate, and therefore, the bias of heat distribution is reduced in portions between the surface of the glass substrate and the inside thereof. That is, the inside of the glass substrate is heated relatively uniformly, thus making it possible to suppress a rise in temperature only at the processed end surfaces on the laser irradiation side. Therefore, it is possible to melt the two glass substrates and fuse them together while suppressing the flowing due to melting of the processed end surfaces of the glass substrates.

In a method for fusing glass substrates according to another aspect of the present invention, in the second step, the laser beam is condensed near surfaces on a laser beam irradiation side of the first and second glass substrates.

Here, the laser beam is condensed near the surfaces on the laser beam irradiation side of the two glass substrates, and the surfaces are irradiated with the laser beam. Therefore, it is possible to fuse the two glass substrates with little influence on the inside of the glass substrates by efficiently melting the portions irradiated with the laser beam.

A laser processing apparatus according to an aspect of the present invention is an apparatus for irradiating two glass substrates in close contact with a laser beam and fusing the glass substrates together. This laser processing apparatus includes a worktable and a laser beam irradiation mechanism. A first glass substrate and a second glass substrate that are in close contact are placed on the worktable. The laser beam irradiation mechanism irradiates a portion where the first glass substrate and the second glass substrate are to be joined with a laser beam having a wavelength of 2.7 µm or more and 6.0 µm or less.

In a laser processing apparatus according to another aspect of the present invention, the laser beam irradiation mechanism includes a laser oscillator and an optical system. The laser oscillator oscillates the laser beam having a wavelength of 2.7 µm or more and 6.0 µm or less. The optical system condenses the laser beam oscillated by the laser oscillator and irradiates the portion where the first glass substrate and the second glass substrate are to be joined with the condensed laser beam.

A laser processing apparatus according to yet another aspect of the present invention further includes a scanning mechanism that moves the optical system and the worktable relative to each other and scans the condensed laser beam along the joining portion.

### Advantageous Effects of the Invention

With the present invention described above, it is possible to fuse two glass substrates using a simple method and a simple apparatus configuration without deformation of processed end surfaces.

### Brief Description of Drawings

FIG. 1 is a schematic configuration diagram of a laser processing apparatus according to an embodiment of the present invention.
FIG. 2 is a schematic diagram showing an example of two glass substrates to be used in a method of the present invention.
FIG. 3 is a diagram showing a relationship between the wavelength of a laser beam and the transmittance in alkali-free glass.
FIG. 4 is a diagram showing a relationship between the wavelength of a laser beam and the transmittance in soda glass.
FIG. 5 shows micrographs of cross sections of fused two glass substrates.
FIG. 6 shows diagrams of fused two glass substrates according to other embodiments.

### Description of Embodiments

### Laser processing apparatus

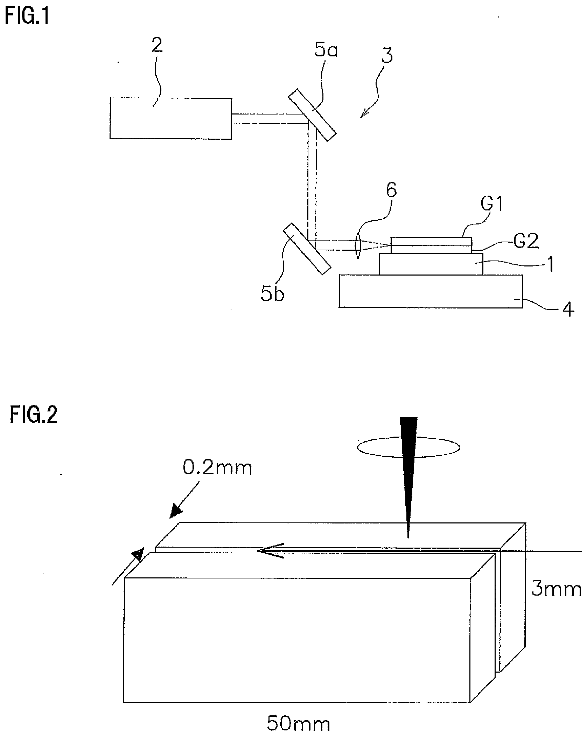

FIG. 1 shows a laser processing apparatus according to an embodiment of the present invention. This laser processing apparatus includes a worktable 1 on which two stacked glass substrates G1 and G2 are placed, a laser oscillator 2, an optical system 3, and a table moving mechanism 4 serving as a scanning mechanism. The laser oscillator 2, the optical system 3, and the table moving mechanism 4 constitute a laser irradiation mechanism.

The laser oscillator 2 oscillates a mid-infrared laser beam having a wavelength of 2.7 µm or more and 6.0 µm or less. Here, it is sufficient that the laser oscillator 2 emits a laser beam having a wavelength of 2.7 to 6.0 µm as described above that is selected from the group consisting of mid-infrared laser beams of an Er:Y₂O₃ laser, an Er:ZBLAN laser, an Er:YSGG laser, an Er:GGG laser, an Er:YLF laser, an Er:YAG laser, a Dy:ZBLAN laser, a Ho:ZBLAN laser, a CO laser, a Cr:ZnSe laser, a Cr:ZnS laser, a Fe:ZnSe laser, a Fe:ZnS laser, and a semiconductor laser. Moreover, here, a continuous oscillation laser beam is emitted.

The optical system 3 includes two reflecting mirrors 5a and 5b and a condensing lens 6. The reflecting mirrors 5a and 5b guide a laser beam oscillated by the laser oscillator 2 so as to be orthogonal to the lateral surfaces of the two glass substrates G1 and G2. The condensing lens 6 is set to condense the laser beam such that the laser beam is condensed on the surface of a portion where the two glass substrates G1 and G2 are to be joined.

The table moving mechanism 4 is a mechanism for moving the worktable 1 in an X direction and a Y direction that are orthogonal to each other. With this table moving mechanism 4, a light condensing point can be scanned along the portion where the two glass substrates G1 and G2 are to be joined.

### Method for fusing glass substrates

When the two glass substrates G1 and G2 are fused using the apparatus described above, first, the two glass substrates G1 and G2 to be fused are stacked and set at a predetermined position on the worktable 1. Next, as shown in the schematic diagram in FIG. 2, the portion where the two glass substrates G1 and G2 are to be joined is irradiated with the above-described mid-infrared laser beam from the lateral surface sides of the two glass substrates G1 and G2. It should be noted that the position at which the laser beam is condensed is set to be on the surfaces (lateral surfaces) of the glass substrates G1 and G2 or near the surfaces. The laser beam is scanned along the joining portion while being continuously emitted.

With the above-described method, the portions of the two glass substrates G1 and G2 that are in close contact are melted and fused together. At this time, the lateral surfaces of the two glass substrates G1 and G2 irradiated with the laser beam are not heated to a high temperature. Therefore, it is possible to suppress melting and deformation of the end surfaces (processed end surfaces).

### Transmittance and wavelength

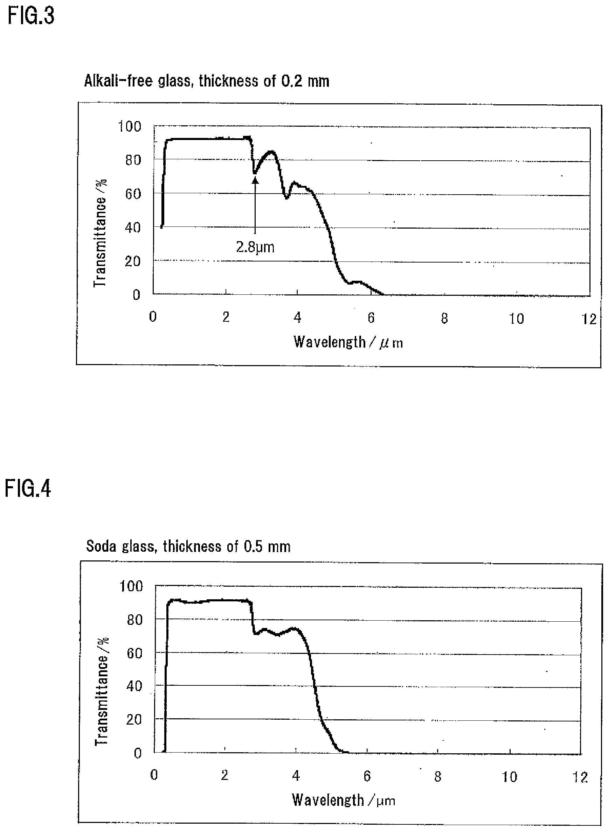

FIG. 3 shows a relationship between the wavelength of a laser beam and the transmittance in a glass substrate made of alkali-free glass (e.g., OA10 (manufactured by Nippon Electric Glass Co., Ltd.)) having a thickness of 0.2 mm. FIG. 4 shows a relationship between the wavelength of a laser beam and the transmittance in a glass substrate made of soda glass having a thickness of 0.5 mm.

As is clear from FIG. 3, the alkali-free glass plate having a thickness of 0.2 mm has a transmittance of "0" with respect to a CO2 laser beam having a wavelength of 10.6 µm, and therefore, the laser beam is absorbed on the surfaces of the substrates. The transmittance with respect to a YAG laser beam having a wavelength of 1 µm or a green laser beam having a wavelength of 532 nm is 90% or more, and most of about 10% of the laser beam that is not transmitted is reflected off the surfaces and is not absorbed to the inside of the substrates. In the case of a laser beam having a wavelength of 2.8 µm, the laser beam is substantially uniformly absorbed to the inside of the substrates by adjusting the output of the laser beam to have appropriate power, thus making it possible to melt the inside of the two stacked substrates to fuse the substrates. At this time, it is possible to suppress an excessive rise in temperature of the surfaces (end surfaces on the laser beam irradiation side, that is, processed end surfaces) of the substrates and deformation of the processed end surfaces due to melting.

As shown in FIG. 4, in the case of the soda glass plate having a thickness of 0.5 mm, a laser beam having a wavelength of 2.8 µm is absorbed while being transmitted to the inside of the substrates. Therefore, when the power of output of the laser beam is appropriately adjusted, it is possible to melt the inside of the two stacked substrates and fuse the substrates as well as to suppress deformation of the processed end surfaces due to melting in the same manner as mentioned above.

It should be noted that the difference in transmittance values between the graphs shown in FIGS. 3 and 4 is caused by the difference in thickness between the samples, and it is thought that there is no difference between the transmittances of an alkali-free glass plate and a soda glass plate that have the same thickness.

In view of the above, it is inferred that, with regard to a large number of types of glass substrates, it is possible to melt the inside of two glass substrates and fuse the substrates while suppressing deformation of the processed end surfaces due to melting by using a laser beam having a wavelength of 2.7 µm or more and 6.0 µm or less whose power is appropriately adjusted. Also, even when substrates to be irradiated with a laser beam have a relatively large thickness, it is possible to stably fuse the two substrates by using a laser beam having a wavelength of 2.7 µm or more and 5.0 µm or less.

### Experimental examples

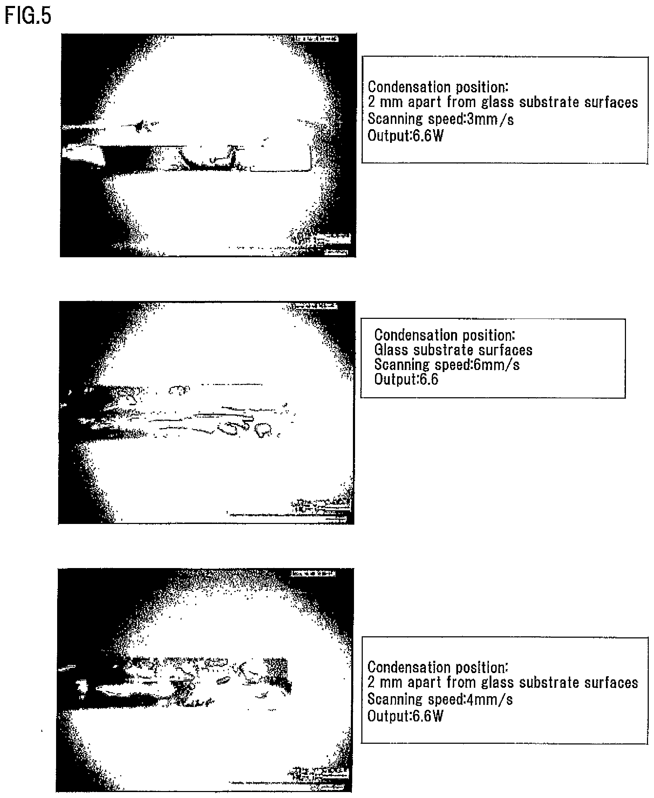

FIG. 5 shows experimental examples. The following are the experimental conditions here.
Glass substrate: alkali-free glass plate of 3 mm×50 mm×t0.2 mm (e.g., OA10 (manufactured by Nippon Electric Glass Co., Ltd.))
Laser beam: Er fiber laser beam, wavelength of 2.7 µm, output of 6.6 W, continuous oscillation

It should be noted that in FIG. 5, the right ends of the cross sections are the end surfaces (processed end surfaces) on the laser irradiation side.

It is found from the results of these experiments that it is possible to stably fuse the two glass substrates while suppressing deformation of the processed end surfaces due to melting by using a mid-infrared laser beam and appropriately adjusting the irradiation conditions.

### Other embodiments

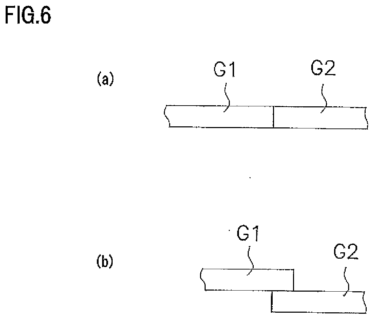

The present invention is not limited to the above-described embodiment, and various variations and modifications can be carried out without departing from the scope of the present invention.
(a) Although the case where two glass substrates were stacked as shown in FIG. 1 and fused was described in the above embodiment, a form of two glass substrates to be fused is not limited to this. For example, as shown in FIG. 6(a), the present invention can also be applied to a case where the end surfaces of two glass substrates are brought into contact with each other and fused. In addition, as shown in FIG. 6(b), the present invention can also be applied to a case where only portions of two glass substrates overlap each other.
(b) Although a continuous oscillation laser beam was used in the above embodiment, irradiation may be performed using a quasi-continuous oscillation pulse laser beam having a repetition frequency of 1 MHz or more or a pulse laser beam having a repetition frequency of 10 kHz or more.

### Industrial Applicability

With the method for fusing glass substrates and the laser processing apparatus according to the present invention, it is possible to fuse two glass substrates using a simple method and a simple apparatus configuration without deformation of processed end surfaces.

### Reference Signs List

- 1: Worktable
- 2: Laser oscillator
- 3: Optical system
- 4: Table moving mechanism
- G1, G2: Glass substrate

## Claims

1. A method for fusing glass substrates in which two glass substrates in close contact are irradiated with a laser beam and fused together, the method for fusing glass substrates using a laser beam comprising:
a first step in which a first glass substrate and a second glass substrate are brought into close contact; and
a second step in which the first glass substrate and the second glass substrate are melted and fused together by irradiating a portion where the first and second glass substrates are to be joined with a laser beam having a wavelength of 2.7 µm or more and 6.0 µm or less.

2. The method for fusing glass substrates using a laser beam according to claim 1, wherein in the second step, the laser beam is condensed near surfaces on a laser beam irradiation side of the first and second glass substrates.

3. A laser processing apparatus for irradiating two glass substrates in close contact with a laser beam and fusing the glass substrates with each other, the laser processing apparatus comprising:
a worktable on which a first glass substrate and a second glass substrate that are in close contact are placed; and
a laser beam irradiation mechanism that irradiates a portion where the first glass substrate and the second glass substrate are to be joined with a laser beam having a wavelength of 2.7 µm or more and 6.0 µm or less.

4. The laser processing apparatus according to claim 3,
wherein the laser beam irradiation mechanism includes:
a laser oscillator that oscillates the laser beam having a wavelength of 2.7 µm or more and 6.0 µm or less; and
an optical system that condenses the laser beam oscillated by the laser oscillator and irradiates the portion where the first glass substrate and the second glass substrate are to be joined with the condensed laser beam.

5. The laser processing apparatus according to claim 4, further comprising a scanning mechanism that moves the optical system and the worktable relative to each other and scans the condensed laser beam along the joining portion.
